# EUROPÄISCHE PATENTANMELDUNG

(11) **EP 3 407 242 A1**
(43) Veröffentlichungstag der Anmeldung: **28.11.2018**
(21) Anmeldenummer: 18000475.6
(22) Anmeldetag: 24.05.2018
(51) Int. Cl.: G06F 21/73, H04L 9/08, H04L 9/32

(54) **PERSONALISIEREN EINES HALBLEITERELEMENTS**

(30) Priorität: 26.05.2017 DE 102017005057
(71) Anmelder: Giesecke+Devrient Mobile Security GmbH, 81677 München (DE)
(72) Erfinder: Rösner, Martin, 83527 Haag in Oberbayern (DE); Reinl, Markus, 81827 München (DE); Badawy, Waleed, 81679 München (DE)

(57) **Zusammenfassung**

Die vorliegende Erfindung ist gerichtet auf ein Verfahren zum sicheren Personalisieren eines Halbleiterelements, z.B. eines Chips, welches es ermöglicht, Sicherheitsvorkehrungen bei einem Einbringen von genormten und personalisierten Daten in ein Halbleiterelement zu treffen. Somit kann das vorliegende Verfahren auch als ein Verfahren zum sicheren Individualisieren eines Halbleiterelements bezeichnet werden. Die vorliegende Erfindung ist ferner gerichtet auf ein entsprechend eingerichtetes Personalisierungssystem zur sicheren Personalisierung eines Halbleiterelements sowie auf ein Computerprogrammprodukt mit Steuerbefehlen, welche das vorgeschlagene Verfahren implementieren bzw. die vorgeschlagene Systemanordnung betreiben.

## Beschreibung

Die vorliegende Erfindung ist gerichtet auf ein Verfahren zum sicheren Personalisieren eines Halbleiterelements, z.B. eines Chips, welches es ermöglicht, Sicherheitsvorkehrungen bei einem Einbringen von genormten und personalisierten Daten in ein Halbleiterelement zu treffen. Somit kann das vorliegende Verfahren auch als ein Verfahren zum sicheren Individualisieren eines Halbleiterelements bezeichnet werden. Die vorliegende Erfindung ist ferner gerichtet auf ein entsprechend eingerichtetes Personalisierungssystem zur sicheren Personalisierung eines Halbleiterelements sowie auf ein Computerprogrammprodukt mit Steuerbefehlen, welche das vorgeschlagene Verfahren implementieren bzw. die vorgeschlagene Systemanordnung betreiben.

EP 1785 916 A1 zeigt ein Verfahren zur Herstellung eines Smart-Card-Körpers zur Aufnahme eines Halbleiter-Chips, welches zwar generell ermöglicht, einen Halbleiter-Chip in einen Körper einzubringen, wobei hierbei jedoch nicht der gesamte Prozess überwacht wird.

EP 1 321 888 B1 zeigt ein Verfahren zur Erhöhung der Sicherheit von Schaltkreisen, bei dem bestimmte Datenverarbeitungsvorgänge aufgezeigt werden. Insbesondere wird hierbei auf sogenannte SIM-Karten abgestellt.

Gemäß bekannter Verfahren werden Halbleiter-Chips bzw. Halbleiterelemente in unterschiedlichen Formaten hergestellt, welche entweder von einem einzelnen Hersteller bereitgestellt werden, oder aber auch arbeitsteilig räumlich verteilt hergestellt werden. Da es unterschiedliche Formate gibt, wie Halbleiterelemente konkret auszugestalten sind, ist es hierbei teilweise nicht mehr möglich, dass der gesamte Produktionsablauf von einem einzelnen Hersteller bewerkstelligt wird. Somit werden also Herstellungsprozesse in einzelne Arbeitsschritte aufgeteilt, die von unterschiedlichen Herstellern teilweise an unterschiedlichen Produktionsstandorten ausgeführt werden. Hierbei ist es jedoch nachteilig, dass solche Halbleiterelemente sensitive Daten aufweisen können und zudem unterschiedliche Sicherheitsmechanismen bereitstellen, welche manipuliert werden könnten. So ist es letztendlich einem einzelnen Hersteller nicht mehr möglich, die unterschiedlichen Arbeitsschritte derart zu überwachen, dass bei dem fertigen Produkt garantiert werden kann, dass keine manipulierten Daten oder Funktionen verbaut sind.

Auch ist es besonders nachteilig, dass gemäß bekannter Verfahren sicherheitskritische Daten an einzelne Hersteller der Produktionskette ausgeliefert werden müssen. Hierbei sind unterschiedliche kryptographische Verfahren bekannt, welche jedoch wiederum den Nachteil haben, dass diese technisch aufwendig implementiert werden und zudem oftmals nicht sicher sind. Zudem sucht der Fachmann stets nach alternativen Möglichkeiten, Herstellungsprozesse zu überwachen und sicherzustellen, dass das Endprodukt tatsächlich spezifikationsgemäß ausgeliefert werden kann.

Somit hat also ein Hersteller ein großes Interesse daran, einzelne Informationen solange wie möglich, vorzugsweise bis zu einer Lieferung zum Endkunden, geheimzuhalten und hierbei auch die einzelnen Hersteller zu überwachen.

Eine besonders große Rolle stellt hierbei der technische Aufwand dar, da typischerweise einzelne Endprodukte weitestgehend genormt produziert werden sollen, um hier Kosten zu senken. So werden typischerweise Wafer bereitgestellt, welche einzelne Dice aufweisen, die aus dem Wafer vereinzelt werden. So umfassen die Wafer eine Mehrzahl an Dice, die weitestgehend genormt, also während sie noch in dem Wafer umfasst sind, ausgestaltet werden. Somit sollen die vorgeschlagenen Verbesserungen derart ausgeführt werden, dass die Sicherheitsmerkmale nicht vollständig individualisiert auf jedem einzelnen Die implementiert werden müssen, vielmehr sollen zumindest Teilschritte bereits auf dem Wafer implementiert werden. Hierbei muss es aber auch möglich sein, einzelne Produktionsschritte wie beispielsweise das Bereitstellen des Wafers sowie das Vereinzeln der einzelnen Dice auszulagern. So hat beispielsweise ein Hersteller eines Betriebssystems unter Umständen auch ein berechtigtes Interesse daran, gewisse Vorgaben an die Herstellung des Wafers bzw. der Dice zu stellen.

Es ist somit eine Aufgabe der vorliegenden Erfindung, ein Verfahren vorzuschlagen, welches es erlaubt, einzelne Halbleiterelemente zu personalisieren bzw. zu individualisieren, wobei darauf zu achten ist, dass dies mit möglichst wenig technischem Aufwand erfolgt. So soll es einem Hersteller möglich sein, einzelne Halbleiterelemente bereitzustellen, ohne dass hierbei sensitive Daten veröffentlicht werden müssen. So ist eine Aufgabe, das Verfahren derart auszugestalten, dass genormte Arbeitsschritte weitestgehend möglich sind, wobei individualisierte Arbeitsschritte von einem anderen Produktionsstandort ausgeführt werden können und dennoch das Endprodukt sicher personalisiert werden kann. Ferner ist es eine Aufgabe der vorliegenden Erfindung, ein entsprechendes Personalisierungssystem vorzuschlagen sowie ein Computerprogrammprodukt mit Steuerbefehlen, welche das vorgeschlagene Verfahren implementiert bzw. das vorgeschlagene Personalisierungssystem betreibt.

Die Aufgabe wird gelöst mittels eines Verfahrens zum sicheren Personalisieren eines Halbleiterelements gemäß Patentanspruch 1. Weitere vorteilhafte Ausgestaltungen sind in den Unteransprüchen angegeben.

Demgemäß wird ein Verfahren zum sicheren Personalisieren eines Halbleiterelements, z.B. eines Chips, vorgeschlagen, aufweisend ein Speichern eines Betriebssystems und von Schlüsseldaten, aufweisend eine Mehrzahl von Schlüsseln auf dem Halbleiterelement, ein Bereitstellen von Interpretationsdaten, welche ein Identifizieren jeweils mindestens eines Schlüssels aus den abgespeicherten Schlüsseldaten ermöglichen, wobei das Abspeichern und das Bereitstellen in separaten Arbeitsschritten durchgeführt wird.

Das Personalisieren eines Halbleiterelements kann erfindungsgemäß derart durchgeführt werden, dass hierzu ein Schlüssel notwendig ist, der beispielsweise bei einer Durchführung von kryptographischen Funktionen benötigt wird. Hierzu ist es notwendig, dass man derjenigen Bearbeitungsstelle, welche die Personalisierung durchführt, eben einen solchen Schlüssel bereitstellt. Hierbei soll jedoch vermieden werden, dass dieser Schlüssel, der zum Individualisieren bzw. Personalisieren notwendig ist, bereits weiteren Akteuren des Herstellungsprozesses bekannt ist. Somit wurde erfinderisch erkannt, dass man bereits eine Mehrzahl an Schlüsseln genormt auf einer Mehrzahl von Halbleiterelementen bereitstellen kann, hier jedoch dem Hersteller der Mehrzahl der Halbleiter nicht mitteilt, wie diese Schlüssel zu decodieren sind. Somit ist es also möglich, in einem ersten genormten Verfahrensschritt auf einer Vielzahl von Halbleiterelementen ein Betriebssystem sowie Schlüsseldaten mit einer Mehrzahl von Schlüsseln zu hinterlegen. Hierbei ist es diesem ersten Hersteller der Vielzahl der Halbleiterelemente also nicht möglich, die einzelnen Schlüssel aus den Schlüsseldaten auszulesen, obwohl die Schlüsseldaten ihm bereits vorliegt.

Somit erfolgt das eigentliche Personalisieren zu einem späteren Zeitpunkt, nämlich der, dass Interpretationsdaten bereitgestellt werden, wobei die Interpretationsdaten sogenannte Konfigurationsdaten umfassen, welche es erst ermöglichen, die einzelnen Schlüssel aus den Schlüsseldaten auszulesen. Somit kann also in einem genormten Verfahrensschritt auf ein Halbleiterelement bzw. auf eine Mehrzahl von Halbleiterelementen stets das gleiche Betriebssystem und die gleichen Schlüsseldaten hinterlegt werden, was technisch besonders einfach ist, da dies bereits auf einem Wafer durchgeführt werden kann. Werden nunmehr die vereinzelten Dice ausgeliefert, so wird in einem weiteren Arbeitsschritt die Information bereitgestellt, welche notwendig ist, die einzelnen Schlüssel aus der Vielzahl von Schlüsseln, die in den Schlüsseldaten umfasst sind, auszulesen. Somit ist es besonders vorteilhaft, die Interpretationsdaten individuell bereitzustellen, derart, dass ein weiterer Akteur in dem Verfahrensschritt des Bereitstellens der Interpretationsdaten auch eine individuelle Information bekommt, wie er denn nunmehr konkret die einzelnen Schlüssel auslesen kann.

Bei einem Speichern des Betriebssystems und der Schlüsseldaten kann es sich um ein physisches Einbringen dieser Information in die einzelnen Dice handeln, die noch als Wafer vorliegen. Somit werden also sowohl das Betriebssystem als auch die Schlüsseldaten hartcodiert auf dem Halbleiterelement hinterlegt. Dies heißt also, dass diese Daten derart physisch in das Halbleiterelement eingeschrieben werden, dass diese nicht mehr manipulierbar sind. Somit wird also quasi ein Read-only-Speicher geschaffen, der über alle Halbleiterelemente gleich ist. Das Betriebssystem dient dem Betreiben des Halbleiterelements, welches beispielsweise in Form von Hardware-Schaltungen implementiert ist. Beispielsweise handelt es sich bei dem Halbleiterelement um eine sogenannte eSIM-Karte oder ein eUICC-Karte. Somit müssen also bestimmte Datenstrukturen bereitgestellt werden, welche es ermöglichen, die eSIM zu betreiben. Ferner müssen Speicherbereiche vorgesehen werden, die es erlauben, u. a. die Schlüsseldaten abzuspeichern. Das Betriebssystem kann hierbei einen vordefinierten Befehlssatz bereitstellen, weleher es u. a. auch ermöglicht, anhand eines auszulesenden Schlüssels eine kryptographische Funktion bereitzustellen. Bei einem Schlüssel handelt es sich um eine virtuelle Information, welche ebenfalls hartverschaltet auf dem Speicherelement bzw. dem Halbleiterelement hinterlegt ist. Eine solche Schlüsselinformation ist bereits als Kryptographieverfahren bekannt.

Die Schlüsseldaten weisen eine Mehrzahl von solchen Schlüsselinformationen auf, die sich beispielsweise auch überlappen können. So sind die Schlüsseldaten einfach eine Aneinanderreihung irgendwelcher Daten, die noch interpretiert werden müssen. So kann es sich bei den Schlüsseldaten um eine Datenhalde handeln, die an sich für einen Benutzer nutzlos ist. Lediglich durch die Interpretationsinformation bzw. die Information, welche ein Identifizieren der Schlüssel ermöglicht, können die Schlüsseldaten interpretiert werden. So werden die Schlüsseldaten derart bereitgestellt, dass einzelne Schlüssel überlappend oder beabstandet in einer Zeichenfolge hinterlegt sind.

So kann beispielsweise eine Zeichenfolge von 20 alphanumerischen Zeichen bereitgestellt werden, die drei Passwörter aufweist. Ein Passwort ist ein Schlüssel, der an einer bestimmten Position innerhalb der Schlüsseldaten mit einer bestimmten Länge hinterlegt ist. An sich können also die Schlüsseldaten mit beispielsweise 20 Zeichen nicht interpretiert werden, weil hierbei eine Interpretationsinformation notwendig ist. Diese Interpretationsinformation wird mittels der Interpretationsdaten derart bereitgestellt, dass genau spezifiziert wird, an welcher Position und bis zu welcher Länge ein Passwort bzw. ein Schlüssel hinterlegt ist. So ist es möglich, ab der fünften Position innerhalb der Schlüsseldaten, welche 20 Zeichen umfasst, einen Schlüssel zu hinterlegen, der acht Zeichen umfasst. Ein weiterer Schlüssel kann ab der zehnten Position bereitgestellt werden, der somit mit dem ersten Schlüssel überlappt. Somit können also die Schlüsseldaten erst dadurch interpretiert werden, dass spezifiziert ist, wo sich genau einzelne Schlüssel innerhalb der Schlüsseldaten befinden. Der Fachmann erkennt hierbei, dass dies lediglich als Beispiel dient und dass typischerweise Schlüsseldatenen und Schlüssel wesentlich mehr Symbole aufweisen können.

Erfindungsgemäß wurde jedoch erkannt, dass in genormter Weise Schlüsseldaten auf einem Halbleiterelement bereitgestellt werden können, ohne dass hierbei eine Information aus diesen Schlüsseldaten abgeleitet werden kann. Erst in späteren, separaten Verfahrensschritten ist es dann möglich, diese Schlüsseldaten zu interpretieren, weshalb der erste Hersteller von einer solchen Interpretation ausgeschlossen wird. Dies ist deshalb möglich, da das Speichern und das Bereitstellen in separaten Arbeitsschritten durchgeführt werden. Separat bezieht sich hierbei darauf, dass nicht das Betriebssystem mitsamt der Schlüsseldaten gleichzeitig mit der Interpretationsinformation bereitgestellt wird. Somit kann es sich also bei dem Speichern und dem Bereitstellen um zwei zeitversetzte Arbeitsschritte handeln.

So kann ein erster Hersteller das Speichern des Betriebssystems und der Schlüsseldaten übernehmen, indem er sie auf die einzelnen Dice des Wafers aufschreibt. Danach können die einzelnen Dice, also Halbleiterbausteine, ausgeliefert werden. Ein weiterer Hersteller bekommt nunmehr die Interpretationsdaten, insbesondere die Konfigurationsdaten, mitgeteilt und kann dann die Personalisierung in einem weiteren Verfahrensschritt ausführen, da er die Schlüssel identifizieren kann. Somit ist es auch in weiteren Verfahrensschritten möglich, die Halbleiterelemente derart zu personalisieren, dass dies lediglich dem weiteren Akteur möglich ist, der eben auch über die ausgelesenen Schlüssel verfügt. Bei einem separaten Arbeitsschritt kann es sich nicht nur um einen zeitversetzten Arbeitsschritt handeln, sondern vielmehr kann dieser auch räumlich getrennt und insbesondere von einem weiteren Akteur durchgeführt werden. So wird das Speichern von einem ersten Akteur des Herstellungsprozesses durchgeführt und das Bereitstellen von einem zweiten Akteur des Herstellungsprozesses des Halbleiterelements. Hierbei ist es besonders vorteilhaft sicherzustellen, dass der erste Akteur nicht die Interpretationsdaten einsehen kann, da er danach eben auch die Schlüssel auslesen könnte.

Somit kann auch das Bereitstellen der Interpretationsdaten durch eine zentrale Instanz erfolgen, die dem ersten Akteur lediglich Informationen bereitstellt, welches Betriebssystem und welche Schlüsseldaten er auf dem Halbleiterelement hinterlegen soll. Diese zentrale Instanz kann dann dem zweiten Akteur die Interpretationsdaten bereitstellen, derart, dass dieser zweite Akteur die Personalisierung vornehmen kann. Hierbei ist es vorteilhaft, falls die zentrale Instanz über entsprechende Schlüssel verfügt und somit auch verifizieren kann, dass der zweite Akteur tatsächlich den richtigen Schlüssel identifiziert hat. Somit kann also auch die zentrale Instanz feststellen, ob der erste Akteur tatsächlich die gewünschten Schlüsseldaten hinterlegt hat und ob der zweite Akteur tatsächlich berechtigt ist, das Halbleiterelement zu individualisieren. Somit hat also die zentrale Instanz eine Kontrollmöglichkeit, den ersten Akteur sowie auch den zweiten Akteur zu überwachen. Zusammenfassend lässt sich also folgern, dass ein sicheres Personalisieren des Halbleiterelements durchgeführt werden kann und die zentrale Instanz das Endprodukt verifizieren kann.

Gemäß einem Aspekt der vorliegenden Erfindung erfolgt das Speichern auf einem Wafer, welcher den Halbleiterbaustein umfasst. Dies hat den Vorteil, dass das Betriebssystem und die Schlüsseldaten in großer Stückzahl bereits auf die noch zusammenhängenden Dice aufgebracht werden können. Somit können also in einem einzigen Datenschritt viele Halbleiterelemente beschrieben werden, ohne dass hierbei die einzelnen Schlüssel bekanntgegeben werden müssen. Hierbei werden zwar auf jeweils ein Halbleiterelement die Schlüsseldaten aufgebracht, es wird jedoch nicht die Interpretationsinformation bereitgestellt, um die Schlüssel auch auslesen zu können. Hierbei ist es besonders vorteilhaft, dass bekannte Verfahren zum Beschreiben eines Wafers weiterverwendet werden können und trotz der darauffolgenden Personalisierung bereits sicherheitsrelevante Schlüssel hinterlegt werden können, ohne dass hierzu ein großer technischer Aufwand notwendig ist. Vielmehr können bekannte Verfahrensschritte unverändert weitergeführt werden, wobei lediglich die Verfahrensschritte derart angepasst werden, dass zu dem Betriebssystem auch Schlüsseldaten, aufweisend die Schlüssel, aufgebracht werden.

Gemäß einem weiteren Aspekt der vorliegenden Erfindung erfolgt das Bereitstellen nach einem Fertigstellen des Halbleiterelements. Dies hat den Vorteil, dass das Bereitstellen der Interpretationsdaten räumlich und zeitlich derart von dem Herstellen des Halbleiterelements durchgeführt wird, dass tatsächlich auch gewährleistet werden kann, dass die Interpretationsdaten nicht an den Hersteller des Wafers ausgegeben werden müssen. Hierbei ist es also besonders vorteilhaft, dass sowohl die Interpretationsdaten an sich als auch die Schlüsseldaten an sich keinerlei vertrauliche Information bereitstellt. Lediglich in ihrem Zusammenwirken können die Schlüsseldaten und die Interpretationsdaten sicherheitsrelevante Schlüssel decodieren.

Gemäß einem weiteren Aspekt der vorliegenden Erfindung erfolgt das Bereitstellen nach einem Vereinzeln des Halbleiterelements aus dem Wafer. Dies hat den Vorteil, dass die Interpretationsdaten und insbesondere die Schlüsseldaten separat bereitgestellt werden und somit bereits ausgeschlossen ist, dass der Hersteller des Wafers über die Interpretationsdaten verfügt. Vorzugsweise erfolgt das Bereitstellen der Interpretationsdaten lediglich nach einem Ausliefern der einzelnen Halbleiterelemente derart, dass ein weiterer Akteur, beispielsweise ein OEM, die Personalisierung anhand der Schlüssel vornimmt, die er mittels der Interpretationsdaten aus den Schlüsseldaten ausgelesen hat.

Gemäß einem weiteren Aspekt der vorliegenden Erfindung erfolgt das Speichern derart, dass das Betriebssystem und die Schlüsseldaten nicht überschrieben werden können. Dies hat den Vorteil, dass das Betriebssystem und die Schlüsseldaten gemäß herkömmlicher Verfahren auf das Halbleiterelement aufgebracht werden können und insbesondere, dass diese Information hartcodiert hinterlegt werden kann. Somit können bestehende Produktionsprozesse wiederverwendet werden, und insbesondere ist erfindungsgemäß lediglich das Bearbeiten der Wafer derart anzupassen, dass Schlüsseldaten aufgebracht werden. Bei dem Beschreiben der Wafer handelt es sich um einen Prozess, der gemäß dem Stand der Technik sowieso durchgeführt werden muss, und somit entsteht erfindungsgemäß kein Mehraufwand. Somit können also auch die Schlüsseldaten gemäß herkömmlicher Verfahren in das Halbleiterelement eingeschrieben werden.

Gemäß einem weiteren Aspekt der vorliegenden Erfindung erfolgt das Bereitstellen mittels einer gesicherten Verbindung eines Computernetzwerks. Dies hat den Vorteil, dass ein weiterer Akteur in dem Herstellungsprozess, der die Interpretationsdaten empfängt, diese automatisiert mittels einer Schnittstelle abrufen kann. Somit kann eine gesicherte Verbindung eingerichtet werden, anhand derer die Interpretationsdaten automatisiert übermittelt werden und somit ein Personalisieren des Halbleiterelements durchgeführt werden kann. Bei einem Computernetzwerk kann es sich um ein herkömmlieher Netzwerk mit Netzwerk-typischen Komponenten handeln, wie beispielsweise dem Internet. Somit kann auch ein Übertragen der Interpretationsdaten über große Strecken durchgeführt werden, und somit sind auch die Akteure, welche das Speichern bzw. das Bereitstellen übernehmen, räumlich trennbar.

Gemäß einem weiteren Aspekt der vorliegenden Erfindung erfolgt das Speichern und das Bereitstellen räumlich getrennt. Dies hat den Vorteil, dass gewährleistet wird, dass der Arbeitsschritt des Bereitstellens und des Speicherns tatsächlich auch derart separat durchgeführt werden können, dass ein Herstellungsprozess arbeitsteilig durchgeführt werden kann und dennoch hierbei vertrauliche Information in lediglich geringem Umfang bereitgestellt werden muss.

Gemäß einem weiteren Aspekt der vorliegenden Erfindung erfolgt nach einem Bereitstellen der Interpretationsdaten ein Identifizieren mindestens eines Schlüssels aus den Schlüsseldaten. Dies hat den Vorteil, dass das Entschlüsseln der Schlüsseldaten explizit nach dem Bereitstellen erfolgt und somit in dem Verfahrensschritt des Bereitstellens keine vertraulichen Informationen veröffentlicht werden, obwohl die Schlüssel in diesem Arbeitsschritt bereits in Form der Schlüsseldaten vorliegen.

Gemäß einem weiteren Aspekt der vorliegenden Erfindung erfolgt nach dem Identifizieren ein Vergleichen des identifizierten Schlüssels mit einem abgespeicherten Referenzschlüssel. Dies hat den Vorteil, dass somit eine zentrale Instanz verifizieren kann, ob tatsächlich ein richtiger, erwartungsgemäßer Schlüssel ausgelesen wurde. Somit kann auch verifiziert werden, ob die richtigen Schlüsseldaten, aufweisend die Schlüssel, abgespeichert wurden, und ferner, ob die richtigen Interpretationsdaten bereitgestellt wurden. Lediglich mit diesen beiden Datensätzen ist es möglich, einen korrekten Schlüssel zu identifizieren, was mittels eines abgespeicherten Referenzschlüssels erfolgen kann. Der Referenzschlüssel kann von einer zentralen Instanz bereitgestellt werden, welche dem ersten Akteur das Betriebssystem und die Schlüsseldaten mitteilt und einem zweiten Akteur die Interpretationsdaten bereitstellt. Somit kann es sich bei der zentralen Instanz um eine Autorisierungsstelle handeln, die über einen Schlüssel verfügt, insbesondere diejenigen Schlüssel, die in den Schlüsseldaten hinterlegt sind sowie die jeweiligen Referenzschlüssel.

Gemäß einem weiteren Aspekt der vorliegenden Erfindung erfolgt in Abhängigkeit des Vergleichens ein Autorisieren des Halbleiterelements. Dies hat den Vorteil, dass überprüft wird, ob ein identifizierter Schlüssel mit dem abgespeicherten Referenzschlüssel übereinstimmt, und ob somit auch korrekte Daten in dem verteilten Herstellungsprozess verwendet wurden. Somit ist es der zentralen Instanz möglich, sowohl den Hersteller des Wafers zu kontrollieren, der das Betriebssystem und die Schlüsseldaten in das Halbleiterelement einschreibt, als auch den Akteur, der die Identifizierung der Schlüssel vornimmt, so dass alle beteiligten Akteure über die korrekten Daten verfügen müssen, um ein positives Vergleichen des identifizierten Schlüssels und des Referenzschlüssels herbeizuführen. Somit kann die zentrale Instanz bei einer Identität des identifizierten Schlüssels und des zu erwarteten Schlüssels, also des Referenzschlüssels, eine Autorisierung aussprechen. Stimmen der identifizierte Schlüssel und der Referenzschlüssel nicht überein, wird ein Fehler entdeckt und das Halbleiterelement wird ggf. verworfen. Somit kann es sich bei einem solchen Halbleiterelement um ein Halbleiterelement handeln, welches von einem der Akteure manipuliert wurde. Dies kann seitens des Herstellers des Wafers erfolgt sein oder aber auch durch die Instanz, welche die Schlüssel anhand der Interpretationsdaten decodiert. Somit ist es also erfindungsgemäß besonders vorteilhaft, dass eine zentrale Instanz ein Autorisieren jedes Halbleiterelements durchführen kann und somit den gesamten Herstellungsprozess überwachen kann.

Gemäß einem weiteren Aspekt der vorliegenden Erfindung wird das Betriebssystem derart ausgestaltet, dass es anhand mindestens eines identifizierten Schlüssels weitere kryptographische Operationen ausführen kann. Dies hat den Vorteil, dass anhand der ausgelesenen Schlüssel weitere Schlüssel erzeugt werden können, wie es beispielsweise bei einer asymmetrischen Verschlüsselung der Fall ist. Somit können sowohl öffentliche als auch private Schlüssel generiert werden, die in weiteren optionalen Verfahrensschritten Verwendung finden können. Somit können eben auch weitere Sicherheitsmechanismen implementiert werden.

Gemäß einem weiteren Aspekt der vorliegenden Erfindung wird das Halbleiterelement als ein Sicherheitselement bereitgestellt. Dies hat den Vorteil, dass das Halbleiterelement besonders gesicherte Bereiche aufweist, die hardwaretechnisch gegen Manipulation gesichert sind. So kann auf dem Halbleiterelement vorgesehen sein, dass mehrere getrennte Speicher implementiert werden, die voneinander physisch getrennt sind. Somit wird also ein sogenannter Shared-Memory vermieden, mittels dessen es möglich sein kann, dass eine Applikation unberechtigterweise auf einen gemeinsamen Speicher schreibt oder von diesem liest. Somit werden also auf dem Halbleiterelement physische Sicherheitsmerkmale implementiert, die es gar nicht erst ermöglichen, dass ein Prozessor bzw. ein Speicher manipuliert wird. Hierbei können auch programmtechnische Veränderungen vorgenommen werden, die das Halbleiterelement als ein Sicherheitselement ausgestalten. Hierzu kennt der Fachmann bereits kryptographische Verfahren und weitere Sicherheitsmechanismen, die das Halbleiterelement derart absichern, dass es als ein Sicherheitselement gelten kann.

Gemäß einem weiteren Aspekt der vorliegenden Erfindung wird das Halbleiterelement als ein eUICC oder eine eSIM-Karte bereitgestellt. Dies hat den Vorteil, dass das Halbleiterelement gemäß einem Format bereitgestellt werden kann, wie es beispielsweise in Mobiltelefonen Anwendung findet. Hierzu ist es möglich, auch solche Karten erfindungsgemäß zu verifizieren.

Die Aufgabe wird auch gelöst durch ein Personalisierungssystem zur sicheren Personalisierung eines Halbleiterelements, aufweisend einen Speicher, eingerichtet zum Speichern eines Betriebssystems und von Schlüsseldaten, aufweisend eine Mehrzahl von Schlüsseln auf dem Halbleiterelement, und eine Bereitstellungseinheit, eingerichtet zum Bereitstellen von Interpretationsdaten, welche ein Identifizieren jeweils mindestens eines Schlüssels aus den abgespeicherten Schlüsseldaten ermöglichen, wobei der Speicher und die Bereitstellungseinheit derart eingerichtet sind, dass das Speichern und das Bereitstellen in separaten Arbeitsschritten durchführbar ist.

Somit ist es besonders vorteilhaft, dass der Speicher und die Bereitstellungseinheit räumlich getrennt sind und zeitversetzt operieren können. Somit stellt sich der erfindungsgemäße technische Effekt ein, und eine zentrale Instanz, welche das Personalisierungssystem betreibt, kann sowohl den Betreiber des Speichers als auch den Betreiber der Bereitstellungseinheit überwachen. Ferner können weitere Vorrichtungen bzw. Einheiten vorgesehen sein, die netzwerktechnisch derart eingerichtet sind, dass sie mit dem Speicher und der Bereitstellungseinheit kommunizieren. Somit kann beispielsweise eine Einheit bereitgestellt werden, welche einen Referenzschlüssel bereitstellt, und identifizierte Schlüssel mit dem Referenzschlüssel vergleicht. Somit kann auch in einer solchen Einheit ein Autorisieren des Endprodukts erfolgen.

Die Aufgabe wird auch gelöst durch ein Computerprogrammprodukt mit Steuerbefehlen, welche das vorgeschlagene Verfahren implementieren bzw. die vorgeschlagene Personalisierungsanordnung bzw. das Personalisierungssystem betreiben.

Hierbei ist es besonders vorteilhaft, dass das Verfahren Verfahrensschritte vorsieht, welche auch als strukturelle Merkmale des Personalisierungssystems nachgebildet werden können. Insbesondere bezieht sich die vorliegende Erfindung auch auf ein Halbleiterelement an sich, aufweisend ein Betriebssystem und einen Datensatz, der dazu eingerichtet ist, Schlüssel zu codieren, die anhand der vorgeschlagenen Interpretationsdaten ausgelesen werden können. Folglich lassen sich also die Verfahrensschritte auch als strukturelle Merkmale implementieren, wobei das Personalisierungssystem eingerichtet ist, das Verfahren auszuführen, und das Verfahren ist eingerichtet, das Personalisierungssystem zu betreiben. Der Fachmann erkennt hierbei, dass ggf. weitere technische Komponenten notwendig sind, um das Verfahren bzw. das Personalisierungssystem zu betreiben. Hierbei kann es sich beispielsweise um netzwerktechnisch eingerichtete Komponenten handeln.

Weitere vorteilhafte Ausgestaltungen werden anhand der beigefügten Figuren näher erläutert. Es zeigen:
- Fig. 1:: ein Blockschaltbild eines Personalisierungssystems gemäß einem Aspekt der vorliegenden Erfindung; und
- Fig. 2:: ein Ablaufdiagramm eines Verfahrens zum sicheren Personalisieren eines Halbleiterelements gemäß einem Aspekt der vorliegenden Erfindung.

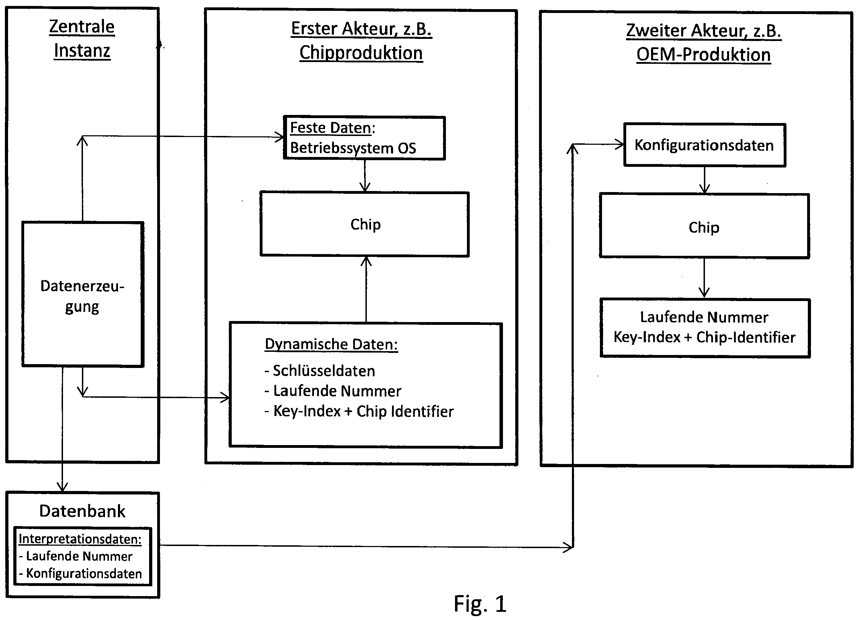

Fig. 1 zeigt das Personalisierungssystem mit einzelnen Herstellern, die die Chipproduktion übernehmen ober eben auch die OEM-Produktion. Hierbei ist eine zentrale Instanz angeordnet, welche über die jeweiligen Interpretationsdaten verfügt. Generell besteht das Problem, dass es kein sicheres Personalisierungskonzept über unsichere Netzwerke gibt, bei dem ein Smartcard-Hersteller die Personalisierungskette von Chipproduktion bis Chipeinbau in ein Endgerät absichern kann.

Die in Figur 1 gezeigte, beispielhafte Lösung ist eine Chipproduktion, wobei ein Standardbetriebssystem OS, also feste Daten, und eine Kombination aus Schlüsseldaten, einem Index eines zu verwendenden Schlüssels der Schlüsseldaten, einem sogenannten Key-Index, und einem Chip-Identifier, welcher den zu personalisierenden Chip bezeichnet, also dynamische Daten, auf einen Chip geladen werden. In der OEM-Produktion wird mittels Konfigurationsdaten, welche in den Interpretationsdaten enthalten sind, auf den Key-Index zugegriffen, um den Chip zu personalisieren. Hierbei stellt sich der Vorteil ein, dass eine sichere Personalisierung über unsichere Netzwerke oder in unsicheren Umgebungen durchgeführt werden kann. Keine Partei hat Zugriff auf verschlüsselte Daten, außer die zentrale Instanz, welche zumindest die Schlüsseldaten und die Interpretationsdaten erzeugt. Beispielsweise kann ein erster Akteur, z.B. eine Chipproduktion, lediglich das Betriebssystem und die Schlüsseldaten auf den Chip einbringen, während ein zweiter Akteur, z.B. eine OEM-Produktion, lediglich die Konfigurationsdaten erhält, ohne die Schlüsseldaten an sich zu kennen. Hierbei können einem dritten Akteur, beispielsweise einem Endbenutzer, sowohl die Schlüsseldaten als auch die Interpretationsdaten zur Verfügung gestellt werden. Somit wird also eine Standardpersonalisierung in einer unsicheren Umgebung ausgeführt.

In der vorliegenden Fig. 1 übermittelt die zentrale Instanz als feste Daten das Betriebssystem OS an einen ersten Akteur, der die Wafer- bzw. ChipProduktion übernimmt. Hierbei werden zumindest die Schlüsseldaten mit optionalen weiteren Daten, wie z.B. laufende Nummer, Key Index, Chip-Identifier, in den Chip eingebracht. Auf der rechten Seite der Fig. 1 ist ein zweiter Akteur gezeigt, dem die Konfigurationsdaten beispielsweise mittels einer Datenbank zur Verfügung gestellt werden. Somit ist ersichtlich, dass lediglich die zentrale Instanz sowohl über die Schlüsseldaten als auch über die Interpretationsdaten verfügt. Lediglich der erste Akteur verfügt über die Schlüsseldaten, während lediglich der zweite Akteur über die Konfigurationsdaten, die Teil der Interpretationsdaten sind, verfügt. Somit ist also eine sichere Personalisierung möglich, so dass vertrauliche Daten zwar auf den Chip aufgebracht werden, diese aber nicht allen Akteuren bekannt sein müssen.

Somit hat also die zentrale Instanz die Kontrolle über alle weiteren Akteure. Hierbei ist es besonders vorteilhaft, dass bestehende Prozesse weiterverwendet werden können. Ferner können unterschiedliche Sicherheitsbereiche geschaffen werden, die unterschiedliche Sicherheitsstufen vorsehen. Hierbei ist es möglich, bekannte Schnittstellen weiter zu verwenden und den Herstellungsprozess des Chips arbeitsteilig zu bewerkstelligen. Somit wird die Personalisierung des Chips auch im Produktionsprozess erst später vorgesehen, während genormte Verfahrensschritte zuerst ausgeführt werden können.

Vorliegend können also statische und dynamische Daten bereitgestellt werden, welche beide mittels eines Schlüssels der zentralen Instanz verschlüsselt werden können, beispielsweise mittels eines Boot-Loader-Key. Beide Teile werden auf den Chip während der Wafer-Produktion geladen. Die statischen Daten umfassen zumindest das sicher eingebettete Betriebssystem OS. Der dynamische Teil der Daten umfasst zumindest die Schlüsseldaten. Diese sind vergleichbar mit einer z.B. mittels dem Schlüssel der zentralen Instanz verschlüsselten Datenhalde oder einem sogenannten Datensalat, also einer Datensequenz, die aus einer Anzahl von beliebigen Schlüsseln besteht. Ferner kann eine eindeutige laufende Nummer, auch als Seed bezeichnet, vorgesehen sein. Die Schlüsseldaten sind ein sequentieller Datenstrom, welcher mittels der Konfigurationsdaten, die in den Interpretationsdaten enthalten sind, interpretiert werden kann. Beide, sowohl Schlüsseldaten, als auch die Konfigurationsdaten sind lediglich der zentralen Instanz bekannt und werden lediglich in einer entsprechend abgesicherten Umgebung abgespeichert. Zur Interpretation der Schlüsseldaten enthalten die Konfigurationsdaten für jeden zu verwendenden Schlüssel eine Identifikation des Schlüssels, eine Ortsangabe, wo der zu verwendende Schlüssel innerhalb der Schlüsseldaten zu finden ist und eine Längenangabe des zu verwendenden Schlüssels. Der zu verwendende Schlüssel kann somit gewechselt werden, ohne dass neue Schlüsseldaten geladen werden müssen, da die Schlüsseldaten mindestens einen Schlüssel enthalten. Der zu verwendende Schlüssel kann in der Schlüsseldatei aufgeteilt auf mehrere Orte in der Schlüsseldatei abgespeichert werden. In der Schlüsseldatei können die zu verwendenden Schlüssel auch sich überlappend abgespeichert sein.

Ferner wird erfindungsgemäß eine Datenbank, z.B. eine sogenannte Production Black Box, abgekürzt mit PBB, verwendet, welche alle relevanten Daten wie z. B. den Schlüssel der zentralen Instanz, die laufende Nummer und die Konfigurationsdaten von der zentralen Instanz empfängt, die zum Abschluss der Personalisierung des Chips notwendig sind und diese sicher speichert. Dies kann entweder online oder verteilt erfolgen. Das Modul kann von der zentralen Instanz kontrolliert werden, was einen Vorteil gegenüber bestehenden Lösungen darstellt, die den Zugriff und die Kontrolle innerhalb des Produktionsprozesses aufsplitten.

Während des Herstellens eines mobilen Endgeräts oder irgendeines anderen Geräts, das ein Sicherheitselement bzw. den vorgeschlagenen Chip aufweist, kann der Chip selbst ein Schlüsselpaar bestehend aus einem privaten und einem öffentlichen Schlüssel zusätzlich zum Schlüssel der zentralen Instanz erzeugen. Der private Schlüssel wird auf dem Chip gespeichert, was zu einem Vorteil bezüglich der Sicherheit gegenüber bestehenden Verfahren führt, wo der Schlüssel außerhalb eines Sicherheitselements abgespeichert ist. Der vom Chip generierte öffentliche Schlüssel wird an die Datenbank, z.B. die Production Black Box, weitergeleitet und wird zusammen mit der korrespondierenden laufenden Nummer gespeichert, die vorab angefordert wurde. Nach einem Vergleichen der laufenden Nummer mit dem Schlüssel der zentralen Instanz zum Verschlüsseln der Schlüsseldaten, verschlüsselt die Datenbank die Konfigurationsdatei und den Schlüssel der zentralen Instanz mit dem öffentlichen Schlüssel und übermittelt die Daten zurück an den Chip beim zweiten Akteur, z.B. bei der OEM-Produktion. Dieser Schritt kann optional während der Geräteherstellung oder sogar danach bei einem Endkunden durchgeführt werden. Somit weiß die Datenbank welche Kombination von laufender Nummer, Konfigurationsdaten und öffentlichen Schlüssel verwendet bzw. aktiviert wurde. Daraus kann die Datenbank an die zentrale Instanz zurück melden, welche Kombinationen von laufender Nummer, Konfigurationsdaten und öffentlichen Schlüssel nicht verwendet wurden, sodass diese nicht verwendeten Kombinationen wieder verwendet werden können. Dies stellt einen weiteren Gewinn an Sicherheit für den Personalisierungsprozess dar. Das Betriebssystem OS auf dem Chip kann nun die Konfigurationsdaten undden Schlüssel der zentralen Instanz entschlüsseln und hierbei den vorab generierten privaten Schlüssel verwenden. Letztendlich ist das Betriebssystem des Chips in der Lage, die Schlüsseldaten zu entschlüsseln und die entsprechenden Schlüssel auszugeben.

Somit ist es vorteilhaft, dass der Chip in der Lage ist, ein Schlüsselpaar bestehend aus privaten und öffentlichen Schlüssel zu erzeugen und den privaten Schlüssel sicher abzuspeichern. Ferner kann das Betriebssystem weitere Befehle umfassen, um die laufende Nummer und den vom Chip erzeugten öffentlichen Schlüssel für die Datenbank bereitzustellen. Das Betriebssystem kann damit die Konfigurationsdatei und die Schlüsseldatei entschlüsseln, wann immer dies benötigt wird.

In Figur 1 ist nur zur besseren Darstellung der Erfindung die Personalisierung eines Chips dargestellt. Der Fachmann erkennt, dass die Anwendung der Erfindung zur parallelen Personalisierung von mehreren Chips entsprechend möglich ist.

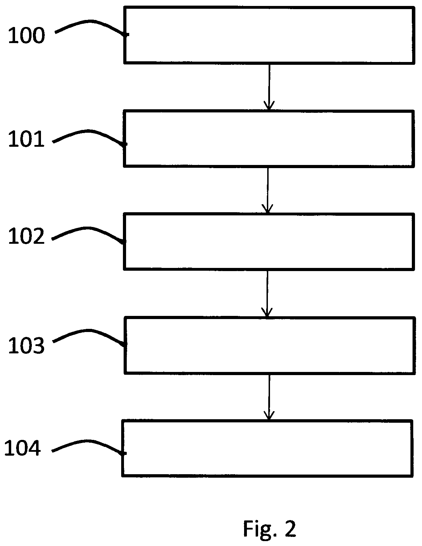

Fig. 2 zeigt in einem Ablaufdiagramm ein Verfahren zum sicheren Personalisieren eines Halbleiterelements, z.B. eines Chips, aufweisend ein Speichern 100 eines Betriebssystems und Schlüsseldaten, aufweisend eine Mehrzahl von Schlüsseln auf dem Halbleiterelement, sowie ein Bereitstellen 101 von Interpretationsdaten, welche ein Identifizieren jeweils mindestens eines Schlüssels aus den abgespeicherten 100 Schlüsseldaten ermöglichen, wobei das Speichern 100 und das Bereitstellen 101 in separaten Arbeitsschritten durchgeführt wird. In weiteren optionalen Verfahrensschritten erfolgt ein Identifizieren 102 mindestens eines Schlüssels aus den Schlüsseldaten. Dies kann somit iterativ durchgeführt werden. Nach einem Identifizieren 102 kann auch optional ein Vergleichen 103 des identifizierten Schlüssels mit einem abgespeicherten Referenzschlüssel erfolgen. Stimmen diese beiden Schlüssel überein, so kann ein Autorisieren 104 des Halbleiterelements erfolgen.

Der Fachmann erkennt hierbei, dass die Verfahrensschritte teilweise iterativ und/oder in anderer Reihenfolge ausgeführt werden können.

## Patentansprüche

1. Verfahren zum sicheren Personalisieren eines Halbleiterelements, aufweisend:
- Speichern (100) eines Betriebssystems und Schlüsseldaten aufweisend eine Mehrzahl von Schlüsseln auf dem Halbleiterelement;
- Bereitstellen (101) von Interpretationsdaten, welche ein Identifizieren jeweils mindestens eines Schlüssels aus der abgespeicherten (100) Schlüsseldaten ermöglichen, **dadurch gekennzeichnet, dass**
- das Speichern (100) und das Bereitstellen (101) in separaten Arbeitsschritten durchgeführt werden.

2. Verfahren nach Anspruch 1, **dadurch gekennzeichnet, dass** das Speichern (100) auf einem Wafer erfolgt, welcher den Halbleiterbaustein umfasst.

3. Verfahren nach Anspruch 1 oder 2, **dadurch gekennzeichnet, dass** das Bereitstellen (101) nach einem Fertigstellen des Halbleiterelements erfolgt.

4. Verfahren nach einem der vorhergehenden Ansprüche, **dadurch gekennzeichnet, dass** das Bereitstellen (101) nach einem Vereinzeln des Halbleiterelements aus dem Wafer erfolgt.

5. Verfahren nach einem der vorhergehenden Ansprüche, **dadurch gekennzeichnet, dass** das Speichern (100) derart erfolgt, dass das Betriebssystem und die Schlüsseldaten nicht überschrieben werden können.

6. Verfahren nach einem der vorhergehenden Ansprüche, **dadurch gekennzeichnet, dass** das Bereitstellen (101) mittels einer gesicherten Verbindung eines Computernetzwerks erfolgt.

7. Verfahren nach einem der vorhergehenden Ansprüche, **dadurch gekennzeichnet, dass** das Speichern (100) und das Bereitstellen (101) räumlich getrennt erfolgt.

8. Verfahren nach einem der vorhergehenden Ansprüche, **dadurch gekennzeichnet, dass** nach einem Bereitstellen (101) der Interpretationsdaten ein Identifizieren (102) mindestens eines Schlüssels aus den Schlüsseldaten erfolgt.

9. Verfahren nach Anspruch 8, **dadurch gekennzeichnet, dass** nach dem Identifizieren (102) ein Vergleichen (103) des identifizierten Schlüssels mit einem abgespeicherten Referenzschlüssel erfolgt.

10. Verfahren nach Anspruch 9, **dadurch gekennzeichnet, dass** in Abhängigkeit des Vergleichens (103) ein Autorisieren (104) des Halbleiterelements erfolgt.

11. Verfahren nach einem der vorhergehenden Ansprüche, **dadurch gekennzeichnet, dass** das Betriebssystem derart ausgestaltet wird, dass es anhand mindestens eines identifizierten Schlüssels weitere kryptographische Operationen ausführen kann.

12. Verfahren nach einem der vorhergehenden Ansprüche, **dadurch gekennzeichnet, dass** das Halbleiterelement als ein Sicherheitselement bereitgestellt wird.

13. Verfahren nach einem der vorhergehenden Ansprüche, **dadurch gekennzeichnet, dass** das Halbleiterelement als eine eUICC oder eine eSIM bereitgestellt wird.

14. Personalisierungssystem zur sicheren Personalisierung eines Halbleiterelements, aufweisend:
- einem Speicher eingerichtet zum Speichern (100) eines Betriebssystems und Schlüsseldaten aufweisend eine Mehrzahl von Schlüsseln auf dem Halbleiterelement;
- einer Bereitstellungseinheit eingerichtet zum Bereitstellen (101) von Interpretationsdaten, welche ein Identifizieren jeweils mindestens eines Schlüssels aus den abgespeicherten (100) Schlüsseldaten ermöglichen, **dadurch gekennzeichnet, dass** der Speicher und die Bereitstellungseinheit derart eingerichtet sind, dass
- das Speichern (100) und das Bereitstellen (101) in separaten Arbeitsschritten durchführbar sind.

15. Computerprogrammprodukt mit Steuerbefehlen, welche das Verfahren gemäß einem der Ansprüche 1 bis 13 implementieren.
